# EUROPEAN PATENT APPLICATION

(11) **EP 4 814 652 A1**
(43) Date of publication of application: **30.09.2026**
(21) Application number: 26164358.9
(22) Date of filing: 12.03.2026
(51) Int. Cl.: G06F 1/16, H01R 12/71, H01R 13/24, H01R 12/70

(54) **CIRCUITRY CONNECTION SYSTEM FOR USER COMPUTING DEVICE**

(30) Priority: 25.03.2025 US 202519089852
(71) Applicant: Google LLC, Mountain View, CA 94043 (US)
(72) Inventor: Wang, Chih Yeh, 220055 New Taipei City (TW); Chen, Joe, 220055 New Taipei City (TW); Yang, Shih-Hsien, 220055 New Taipei City (TW); Chiang, Sheng-tao, 220055 New Taipei City (TW)
(74) Representative: Maikowski & Ninnemann Patentanwälte Partnerschaft mbB

(57) **Abstract**

A user computing device includes a housing defining a cavity and a circuitry connection system contained at least partially within the cavity. The circuitry connection system includes a circuit board comprising circuitry. The circuitry connection system also includes a static pin coupled to an electrical component and fixed relative to the circuit board. The static pin includes a flat top surface. In addition, the circuitry connection system includes an electrical connector including a base portion coupled to the circuit board, a curved portion spaced from the base portion, and an extension portion extending from the base portion to the curved portion. The extension portion is configured to bias the curved portion into contact with the flat top surface of the static pin to electrically connect the electrical component to the circuitry on the circuit board. The curved portion is configured to minimize direct current (DC) resistance between the static pin and the circuitry on the circuit board.

## Description

### FIELD

The present disclosure relates generally to user computing devices. More particularly, the present disclosure relates to a circuitry connection system for a user computing device.

### BACKGROUND

User computing devices can include electrical connectors for connecting electrical components to circuitry on a circuit board of the user computing device. As a nonlimiting example, the electrical components can include a charging device for charging a battery of the user computing device. In such an example, electrical contacts of the charging device come into contact with electrical contacts of the user computing device, which provides electrical charge to the user computing device. The electrical connectors may connect the charging device to charging circuitry on the circuit board so as to provide the electrical charge to the battery.

Some current electrical connectors may include a pin that is biased to contact a contact plate for connecting electrical components to circuitry on a circuit board. However, the pin may shift during use due to clearances designed to permit biasing of the pin relative to the contact plate. Shifting of the pin can result in inconsistent performance and reliability issues. For instance, direct current (DC) resistance between a charging device and the circuit board can be increased when shifting of the pin increases a contact area between the pin and the contact plate, which can reduce charging efficiency of the user computing device. Furthermore, shifting of the pin may prevent the pin from contacting the contact plate. Increased DC resistance and/or a lack of connection between the electrical component and the circuitry on the circuit board can decrease performance of the user computing device.

Accordingly, the present disclosure is directed to a circuitry connection system that provides an electrical connector for providing a stable electrical connection between a component of a user computing device and circuitry on a circuit board of the user computing device.

### SUMMARY

Aspects and advantages of embodiments of the present disclosure will be set forth in part in the following description, or can be learned from the description, or can be learned through practice of the embodiments.

In an aspect, the present disclosure is directed to a user computing device. The user computing device includes a housing defining a cavity. The user computing device also includes a circuitry connection system contained at least partially within the cavity. The circuitry connection system includes a circuit board comprising circuitry. The circuitry connection system also includes a static pin coupled to an electrical component and fixed relative to the circuit board. The static pin includes a flat top surface. In addition, the circuitry connection system includes an electrical connector including a base portion coupled to the circuit board, a curved portion spaced from the base portion, and an extension portion extending from the base portion to the curved portion. The extension portion is configured to bias the curved portion into contact with the flat top surface of the static pin to electrically connect the electrical component to the circuitry on the circuit board. The curved portion is configured to minimize direct current (DC) resistance between the static pin and the circuitry on the circuit board.

In another aspect, the present disclosure is directed to a user computing device. The user computing device includes a housing defining a cavity. The user computing device also includes a circuitry connection system contained at least partially within the cavity. The circuitry connection system includes a circuit board comprising circuitry. The circuitry connection system also includes a static pin coupled to an electrical component and fixed relative to the circuit board. The static pin includes a flat top surface. In addition, the circuitry connection system includes an electrical connector including a base portion coupled to the circuit board, a curved portion spaced from the base portion, and an extension portion extending from the base portion to the curved portion. The extension portion is configured to create interference contact between the curved portion and the flat top surface of the static pin to electrically connect the electrical component to the circuitry on the circuit board. The curved portion is configured to minimize DC resistance between the static pin and the circuitry on the circuit board.

In yet another aspect, the present disclosure is directed to a circuitry connection system for a user computing device. The circuitry connection system includes a circuit board comprising circuitry. The circuitry connection system also includes a static pin coupled to an electrical component and fixed relative to the circuit board. The static pin includes a flat top surface. In addition, the circuitry connection system includes an electrical connector including a base portion coupled to the circuit board, a curved portion spaced from the base portion, and an extension portion extending from the base portion to the curved portion. The extension portion is configured to bias the curved portion into contact with the flat top surface of the static pin to electrically connect the electrical component to the circuitry on the circuit board. The curved portion is configured to minimize DC resistance between the static pin and the circuitry on the circuit board.

These and other features, aspects, and advantages of various embodiments of the present disclosure will become better understood with reference to the following description and appended claims. The accompanying drawings, which are incorporated in and constitute a part of this specification, illustrate example embodiments of the present disclosure and, together with the description, serve to explain the related principles.

### BRIEF DESCRIPTION OF THE DRAWINGS

Detailed discussion of embodiments directed to one of ordinary skill in the art is set forth in the specification, which makes reference to the appended figures, in which:
FIG. 1A illustrates a block diagram of a charging system (e.g., including a user computing device and a charging device) according to one or more exemplary embodiments of the present disclosure;
FIG. 1B illustrates a perspective view of an embodiment of the user computing device corresponding to a wearable computing device being worn by a user according to one or more exemplary embodiments of the present disclosure;
FIG. 1C illustrates a schematic diagram of an embodiment of the charging device according to one or more exemplary embodiments of the present disclosure;
FIG. 1D illustrates a perspective view of an embodiment of a backside of the user computing according to one or more exemplary embodiments of the present disclosure
FIG. 2 illustrates a cross-sectional perspective view of a charging system according to one or more exemplary embodiments of the present disclosure;
FIG. 3A illustrates a perspective view of an embodiment of an electrical connector of a circuitry connection system according to one or more exemplary embodiments of the present disclosure;
FIG. 3B illustrates an enlarged, cross-sectional view of the electrical connector of FIG. 3A according to one or more exemplary embodiments of the present disclosure;
FIG. 4A illustrates a perspective view of another embodiment of an electrical connector of a circuitry connection system according to one or more exemplary embodiments of the present disclosure; and
FIG. 4B illustrates an enlarged, cross-sectional view of the electrical connector of FIG. 4A according to one or more exemplary embodiments of the present disclosure.

### DETAILED DESCRIPTION

Reference now will be made in detail to embodiments, one or more examples of which are illustrated in the drawings. Each example is provided by way of explanation of the embodiments, not limitation of the present disclosure. In fact, it will be apparent to those skilled in the art that various modifications and variations can be made to the embodiments without departing from the scope or spirit of the present disclosure. For instance, features illustrated or described as part of one embodiment can be used with another embodiment to yield a still further embodiment. Thus, it is intended that aspects of the present disclosure cover such modifications and variations.

Repeated use of reference characters and/or numerals in the present specification and/or figures is intended to represent the same or analogous features, elements, or operations of the present disclosure. Repeated description of reference characters and/or numerals that are repeated in the present specification is omitted for brevity.

As referred to herein, the terms "includes" and "including" are intended to be inclusive in a manner similar to the term "comprising." As referenced herein, the terms "or" and "and/or" are generally intended to be inclusive, that is (i.e.), "A or B" or "A and/or B" are each intended to mean "A or B or both." As referred to herein, the terms "first," "second," "third," and so on, can be used interchangeably to distinguish one component or entity from another and are not intended to signify location, functionality, or importance of the individual components or entities. As referenced herein, the terms "couple," "couples," "coupled," and/or "coupling" refer to chemical coupling (e.g., chemical bonding), communicative coupling, electrical and/or electromagnetic coupling (e.g., capacitive coupling, inductive coupling, direct and/or connected coupling, etc.), mechanical coupling, operative coupling, optical coupling, and/or physical coupling.

As referenced herein, the term "system" can refer to hardware (e.g., application specific hardware), computer logic that executes on a general-purpose processor (e.g., a central processing unit (CPU)), and/or some combination thereof. In some embodiments, a "system" described herein can be implemented in hardware, application specific circuits, firmware, and/or software controlling a general-purpose processor. In some embodiments, a "system" described herein can be implemented as program code files stored on a storage device, loaded into a memory, and executed by a processor, and/or can be provided from computer program products, for example, computer-executable instructions that are stored in a tangible computer-readable storage medium (e.g., random-access memory (RAM), hard disk, optical media, magnetic media).

### Overview

As mentioned, user computing devices, such as smart watches, smart phones, earbuds, smart glasses, etc., can include electrical connectors for connecting electrical components (such as charging devices for charging a battery of the user computing device) to circuitry on a circuit board of the user computing device. For example, current electrical connectors may include a pin that is biased to contact a contact plate for connecting electrical components to circuitry on a circuit board. However, in such designs, the pin may shift during use due to clearances designed to permit biasing of the pin relative to the contact plate. Shifting of the pin can result in inconsistent performance and reliability issues. For instance, direct current (DC) resistance between a charging device and the circuit board can be increased when shifting of the pin increases a contact area between the pin and the contact plate, which can reduce charging efficiency of the user computing device. Furthermore, shifting of the pin may prevent the pin from contacting the contact plate. Increased DC resistance and/or a lack of connection between the electrical component and the circuitry on the circuit board can decrease performance of the user computing device.

Motivated by the need to provide stable electrical connections, the present disclosure is directed to a circuitry connection system having an electrical connector configured to provide a stable electrical connection between an electrical component and circuitry on a circuit board. Thus, in an embodiment, the electrical connector is configured to contact a flat top surface of a static pin coupled to the electrical component. In particular, the electrical connector of the present disclosure enables consistent contact with the static pin to improve reliability of the connection between the static pin and the circuitry.

In addition, according to an example embodiment of the present disclosure, the electrical connector can include a base portion coupled to the circuit board and a curved portion spaced from the base portion. The curved portion can be configured to contact the flat top surface of the static pin. The curved portion can be further configured to minimize DC resistance between the static pin and the circuit board. For instance, the curved portion can minimize a surface area of the electrical connector than contacts the flat top surface of the static pin. In one or more embodiments, the electrical component can be an electrical contact of a charging device. In such embodiments, the electrical connector of the present disclosure can improve charging reliability and efficiency by providing a stable electrical connection between the charging device and charging circuitry on a circuit board while minimizing DC resistance of the electrical connection.

Example aspects of the present disclosure provide several technical effects, benefits, and/or improvements in computing technology.

### Example Devices and Systems

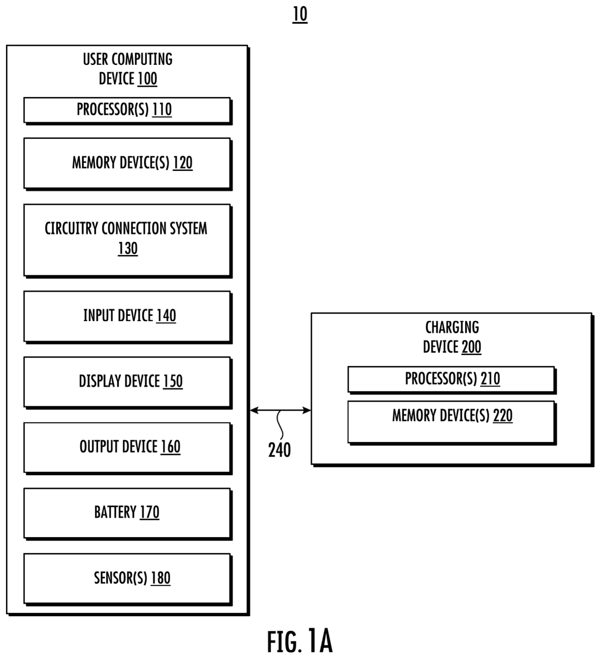

Referring now to the drawings, as shown particularly in FIG. 1A, a schematic diagram of a charging system 10 that includes a user computing device 100 and a charging device 200 is illustrated according the present disclosure. The charging system 10 can include any charging system which allows or is capable of receiving a charge for charging a power source (e.g., a battery 170) of the user computing device 100. For example, the user computing device 100 and the charging device 200 may be coupled to or connected with one another in a wired or wireless manner (e.g., via a charging cable 240 which can enable the charging device 200 to provide a charge to a battery of the user computing device 100 and to enable the charging device 200 and the user computing device 100 to exchange information with one another). Any communications interfaces suitable for communicating may be utilized as appropriate or desired by the user computing device 100 and the charging device 200.

The user computing device 100 may include, for example, a smart band, a smart watch, a smart patch, smart clothing, fitness tracker, and the like. In some embodiments, the user computing device 100 may include a smartphone, a tablet, earbuds, etc., and other devices which can include a battery that is chargeable by a charging device according to the methods described herein.

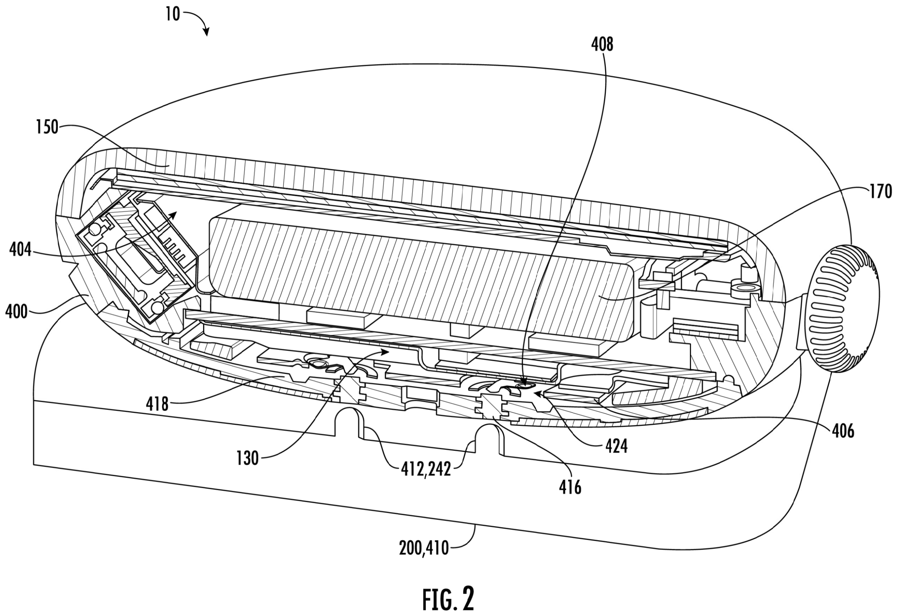

Still referring to FIG. 1A, the user computing device 100 may include one or more processors 110, one or more memory devices 120, a circuitry connection system 130 (as will be described in more detail below with regards to FIGS. 2-3B), an input device 140, a display device 150, an output device 160, and one or more sensors 180. One or more of the components of the user computing device 100 may be operatively connected with one another via a system bus. In some embodiments, the user computing device 100 may include fewer or more components than that shown in FIG. 1A. For example, the user computing device 100 may not include the display device 150. Furthermore, the system bus may be any of several types of bus structures that may further interconnect to a memory bus (with or without a memory controller), a peripheral bus, and/or a local bus using any of a variety of commercially available bus architectures.

In an embodiment, the input device 140 is configured to receive an input from a user and may include, for example, one or more of a keyboard (e.g., a physical keyboard, virtual keyboard, etc.), a mouse, a joystick, a button, a switch, an electronic pen or stylus, a gesture recognition sensor (e.g., to recognize gestures of a user including movements of a body part), an input sound device or voice recognition sensor (e.g., a microphone to receive a voice command), a track ball, a remote controller, a portable (e.g., a cellular or smart) phone, and so on. The input device 140 may also be embodied by a touch-sensitive device or a touch-sensitive display device having a touchscreen capability. For example, the input device 140 may be used by a user of the user computing device 100 to provide an input to control a process of the charging operation of the user computing device 100. For example, the input may be a voice input, a touch input, a gesture input, a click via a mouse or remote controller, and so on.

Moreover, in an embodiment, the display device 150 is configured to present information viewable by the user, for example on a user interface (e.g., a graphical user interface). For example, the display device 150 may be a non-touch sensitive display. The display device 150 may include a liquid crystal display (LCD), a light emitting diode (LED) display, an organic light emitting diode (OLED) display, active matrix organic light emitting diode (AMOLED), flexible display, 3D display, a plasma display panel (PDP), a cathode ray tube (CRT) display, and the like, for example. However, the disclosure is not limited to these example display devices and may include other types of display devices. For example, the display device 150 may be configured to provide a visual representation of a status of a charging operation, to provide an indication regarding whether the user computing device 100 is correctly coupled to the charging device 200, to provide information regarding a biometric measurement, etc.

The output device 160 is configured to provide an output to the user and may include, for example, one or more of an audio device (e.g., one or more speakers), a haptic device to provide haptic feedback to a user, a light source (e.g., one or more light sources such as LEDs which provide visual feedback to a user), the display device 150, and the like. For example, in some embodiments of the disclosure, the user may be provided with an output (e.g., via one or more of the speaker, haptic device, light source, display device, etc.) indicating a status of a charging operation, a status of the battery, etc.

In further embodiments, the sensor(s) 180 may include an inertial measurement unit which includes one or more accelerometers and/or one or more gyroscopes. The one or more accelerometers may be used to capture motion information with respect to the user computing device 100. The one or more gyroscopes may also be used additionally or alternatively to capture motion information with respect to the user computing device 100. For example, the inertial measurement unit may be configured as a six-axis or six-dimensional inertial measurement unit (e.g., a tri-axial accelerometer and a tri-axial gyroscope). In still further embodiments, the sensor(s) 180 may include any suitable sensor, such as a magnetometer, barometers, a heart rate sensor, an imaging sensor, a photoplethysmography (PPG) sensor, and/or any other suitable sensor.

Still referring to FIG. 1A, the charging device 200 may also include one or more processors 210, one or more memory devices 220, and the charging cable 240. The charging cable 240 (e.g., a USB charging cable, for example, a USB type-C charging cable) may be connectable at one end to a device having a charging port (e.g., a charging adapter, a wall charger, charging station etc.), and connectable at another end to a computing device (e.g., the user computing device 100). As such, in an embodiment, the charging cable 240 can receive power via the device having the charging port so that power can then be provided to the user computing device 100.

One or more of the features of the charging device 200 may be operatively connected with one another via a system bus. For example, the system bus may be any of several types of bus structures that may further interconnect to a memory bus (with or without a memory controller), a peripheral bus, and/or a local bus using any of a variety of commercially available bus architectures.

The processors 110, 210 described herein can be any suitable processing device that can be included in a user computing device 100 or the charging device 200. For example, the processor(s) 110, 210 may include processor cores, a controller and an arithmetic logic unit, a central processing unit (CPU), a graphics processing unit (GPU), a digital signal processor (DSP), an image processor, a microcomputer, a field programmable array, a programmable logic unit, an application-specific integrated circuit (ASIC), a microprocessor, a microcontroller, etc., and/or combinations thereof, including any other device capable of responding to and executing instructions in a defined manner. Moreover, in an embodiment, the processor(s) 110, 210 can be a single processor or a plurality of processors that are operatively connected, for example in parallel.

The memory devices 120, 220 can include one or more non-transitory computer-readable storage mediums, such as such as a Read Only Memory (ROM), Programmable Read Only Memory (PROM), Erasable Programmable Read Only Memory (EPROM), and flash memory, a USB drive, a volatile memory device such as a Random Access Memory (RAM), an internal or external hard disk drive (HDD), floppy disks, a Blu-ray disk, or optical media such as CD ROM discs and DVDs, and combinations thereof. However, examples of the memory devices 120, 220 are not limited to the above description, and the memory devices 120, 220 may be realized by other various devices and structures as would be understood by those skilled in the art.

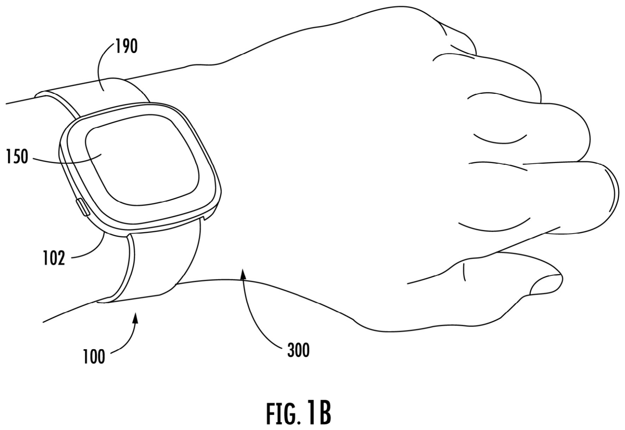

Referring now to FIG. 1B, a perspective view of the user computing device 100, corresponding to a wearable computing device (e.g., a smartwatch), being worn by a user 300 is illustrated according to the present disclosure. For example, the user computing device 100 can include a display device 150 and a fastener 190 (e.g., a band) configured to secure the user computing device 100 to the user 300. In an embodiment, the fastener 190 may be connectable to a body 102 of the user computing device 100. Although the user computing device 100 is depicted as a smart watch in the example embodiment illustrated in FIG. 1B, it should be understood that the present disclosure is not so limiting. For instance, the user computing device 100 according to example embodiments may include, for example, a smartphone, smart glasses, earbuds, a tablet, a laptop computer, and/or another computing device utilized by a user.

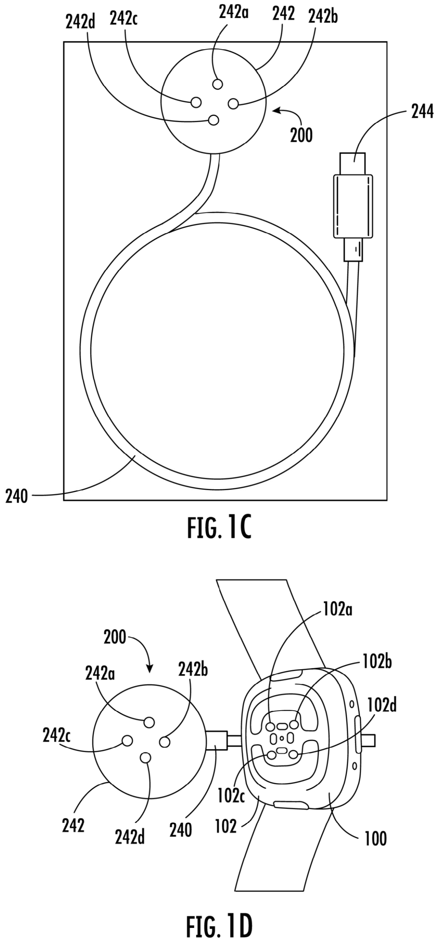

Referring now to FIG. 1C, a schematic diagram of an embodiment of the charging device 200 including the charging cable 240 is illustrated according to the present disclosure. For example, the charging cable 240 can include a first end 242 having a plurality of pins (e.g., a first pin 242a, a second pin 242b, a third pin 242c, and a fourth pin 242d) which can include a voltage or power line and a ground line and can be configured to deliver power and data to the user computing device 100. The example of FIG. 1C shows the charging device 200 having four pins, however the disclosure is not limited to this example, and the charging device 200 may have more or less than four pins. In some embodiments, the plurality of pins may be magnetic or have magnetic properties. For example, the charging cable 240 can include a second end 244 which is connectable to a device having a charging port (e.g., a charging adapter, a wall charger, charging station etc.). It is noted that FIG. 1C is merely an example charging device and that the disclosure is not limited to the charging device 200 of FIG. 1C. For example, in some embodiments the charging device 200 may not include any pins.

Referring now to FIG. 1D, a perspective view of an embodiment of a backside of the user computing device 100 including a plurality of ports or contacts (e.g., a first port 102a, a second port 102b, a third port 102c, and a fourth port 102d) is illustrated according to the present disclosure. In such embodiments, the first port 102a, the second port 102b, the third port 102c, and the fourth port 102d can be configured to receive the power and the data delivered from the charging cable 240 via the plurality of pins (e.g., the first pin 242a, the second pin 242b, the third pin 242c, and the fourth pin 242d, respectively). The example of FIG. 1D shows the user computing device 100 having four ports or contacts, however the disclosure is not limited to this example, and the user computing device 100 may have more or less than four ports or contacts. For example, the plurality of ports or contacts can be provided on a rear side of the body 102 of the user computing device 100 and may be provided proximate or adjacent to a plurality of sensors which are also provided on the rear side of the user computing device 100. In embodiments, the plurality of pins provided at the first end 242 of the charging cable 240 may be aligned with the plurality of ports or contacts for the charging device 200 to charge the user computing device 100. In some embodiments, an orientation at the interface between the plurality of pins and the plurality of ports or contacts can be reversed so that either input orientation may be recognized by the user computing device 100.

Referring now to FIG. 2, a cross-sectional view of the charging system 10 including the user computing device 100 and the charging device 200 is illustrated according the present disclosure. As shown, the user computing device 100 may be a wearable computing device, such as a smart watch. The user computing device 100 includes a housing 400 defining a cavity 404. The circuitry connection system 130 is contained at least partially within the cavity 404.

The circuitry connection system 130 includes a circuit board 406 having circuitry 408. The circuit board 406 may include one or more types of circuitry 408 configured to perform various operations of the user computing device 100. In embodiments, the circuitry 408 may be charging circuitry. In such embodiments, the charging circuitry may be configured to supply energy from an external power supply to the battery 170 when the user computing device 100 is in contact with the charging device 200. Although the circuitry 408 is depicted as charging circuitry in the example embodiment illustrated herein, it should be understood that the present disclosure is not so limiting. For instance, the circuitry 408 may include communication circuitry, converter circuitry, detection circuitry, and/or any other suitable types of circuitry for permitting the user computing device 100 to perform desired operations.

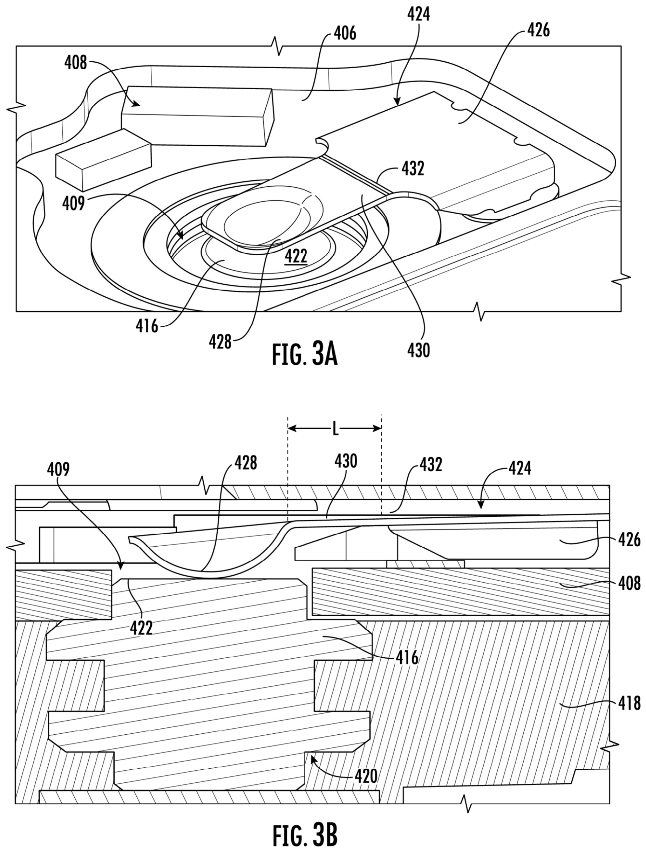

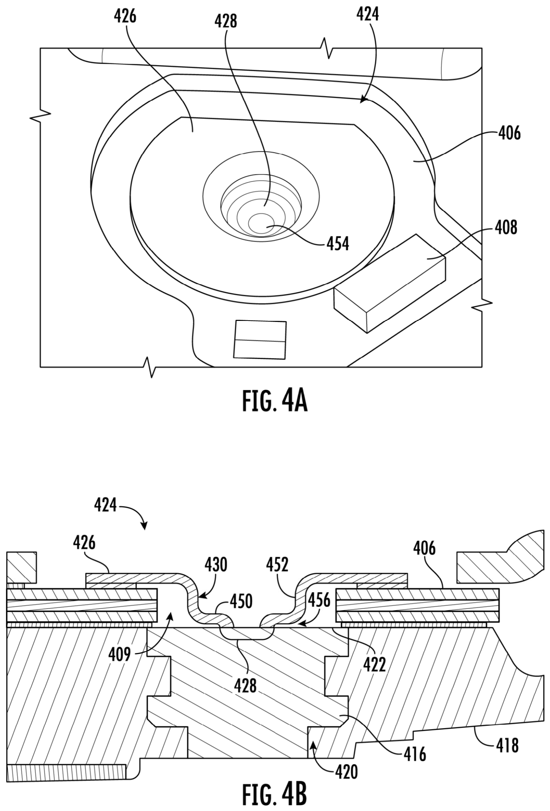

Further, the circuit board 406 may support one or more components of the user computing device 100, such as the processor 110, the memory device(s) 120, etc. Moreover, the circuit board 406 may define a hole 409 extending therethrough (as shown in FIGS. 3B and 4B). In some embodiments, the circuit board 406 may be a printed circuit board (PCB). In other embodiments, the circuit board 406 may be a flexible circuit board. That is, the circuit board 406 may be formed of any suitable flexible material, such as polymides, polymers, etc. In such embodiments, the circuitry connection system may further include a stiffener connected to the circuit board 406 (e.g., in any suitable manner, such as via adhesives). More particularly, the stiffener may be configured to provide mechanical support and stiffness to the circuit board 406. The stiffener may be formed of any suitable rigid material (e.g., metal, fiberglass, etc.).

Referring back to FIG. 2, the circuitry connection system 130 includes a static pin 416 configured to be coupled to an electrical component 410, such as the charging device 200. More particularly, the static pin 416 may electrically connect the electrical component 410 to the circuitry connection system 130. The static pin 416 is formed of a conductive material (e.g., metal). As such, the static pin 416 can be electrically connected to the electrical component 410 (e.g., when the electrical component 410 is in contact with the static pin 416 (e.g., a bottom surface thereof)).

In embodiments, as shown, the electrical component 410 may include an electrical contact 412. The electrical contact 412 may include one or more conductors that can transfer a charge from the electrical component 410 (e.g., the charging device 200) by contacting a corresponding conductor (e.g., the static pin 416) on the user computing device 100. As shown, the electrical contact 412 may be the pin(s) 242a, 242b, 242c, 242d of the charging device 200. Although the electrical component 410 is depicted as the charging device 200 in the example embodiment illustrated herein, it should be understood that the present disclosure is not so limiting. For instance, the electrical component 410 of the circuitry connection system 130 may include, but is not limited to, a display, wiring, a driver, a sensor, the battery 170, and/or any other suitable electrical components for permitting the user computing device 100 to perform desired operations.

Referring still to FIG. 2, the static pin 416 is fixed relative to the circuit board 406. For instance, the circuitry connection system 130 may include a spacer 418 arranged between the circuit board 406 and the electrical component 410, as shown. The spacer 418 may at least partially house the static pin 416. In embodiments, the spacer 418 may be a bottom cover of the user computing device 100, as shown. In such embodiments, the bottom cover can be removably coupled to the housing 400 (e.g., to permit access to the cavity 404 and components therein). In this manner, the bottom cover can contact (e.g., touch) a wrist of the user when the user computing device 100 is secured to the wrist of the user (e.g., via a band).

Referring generally now to FIGS. 3A-4B, the static pin 416 includes a flat top surface 422. For instance, the flat top surface 422 may be planar (i.e., extend in one plane). In embodiments, the flat top surface 422 may extend parallel to a top (or bottom) surface of the circuit board 406.

Further, the spacer 418 may define an opening 420 extending therethrough (see FIGS. 3B and 4B). The opening 420 may be at least partially aligned with the hole 409 of the circuit board 406 (see FIGS. 3B and 4B). That is, the hole 409 may at least partially overlap the opening 420. The static pin 416 may be fixed to the spacer 418 in the opening 420. As such, the static pin 416 may be accessible via the hole 409. In some embodiments (see FIG. 3B), the static pin 416 may extend partially through the hole 409 such that the flat top surface 422 is arranged in the hole 409. In other embodiments, the static pin 416 may extend entirely through the hole 409 such that the circuit board 406 is arranged between the flat top surface 422 and the electrical component 410. In still other embodiments, the flat top surface 422 of the static pin 416 may be flush with or recessed into a top surface of the spacer 418 such that the static pin 416 is outside of the hole 409 (see FIG. 4B). The static pin 416 may be fixed to the spacer 418 in any suitable manner (e.g., via an adhesive, via a press-fit connection, via an over-molding manufacturing process, etc.). The spacer 418 may be formed of an insulating (i.e., non-conductive) material (e.g., a plastic or a ceramic).

Referring still to FIGS. 3A-4B, in addition, the circuitry connection system 130 includes an electrical connector 424 configured to electrically connect the electrical component 410 to the circuitry 408 on the circuit board 406. As such, the electrical connector 424 is formed of a conductive material (e.g., a metal). The electrical connector 424 includes a base portion 426 coupled to the circuit board 406. More particularly, the base portion 426 is electrically connected to the circuitry 408. The circuit board 406 may be arranged between the base portion 426 and the spacer 418, as shown.

The electrical connector 424 further includes a curved portion 428 spaced from the base portion 426. The curved portion 428 is configured to contact the flat top surface 422 of the static pin 416. In some embodiments, the curved portion 428 may contact the flat top surface 422 at least partially within the hole 409 of the circuit board 406. That is, the curved portion 428 may contact the flat top surface 422 between the top and bottom surfaces of the circuit board 406 (see FIG. 3B). In other embodiments, the curved portion 428 may contact the flat top surface 422 outside of the hole 409 (e.g., at or above the top surface of the circuit board 406 or at or below the bottom surface of the circuit board 406 (see FIG. 4B)).

The curved portion 428 is configured to minimize direct current (DC) resistance between the static pin 416 and the circuitry 408 on the circuit board 406. For example, the curved portion 428 may be convex relative to the flat top surface 422 so as to minimize a contact area between the flat top surface 422 of the static pin 416 and the curved portion 428. Minimizing the DC resistance between the static pin 416 and the circuitry 408 on the circuit board 406 can reduce electrical resistance losses from the electrical connector 424, which can improve efficiency of desired operations (e.g., a charging operation).

The electrical connector 424 further includes an extension portion 430 extending from the base portion 426 to the curved portion 428. In particular, FIGS. 3A-3B illustrates an enlarged cross-sectional view of an embodiment of the electrical connector 424 according to the present disclosure. Moreover, FIGS. 4A-4B illustrates an enlarged cross-sectional view of another embodiment of the electrical connector 424 according to the present disclosure.

Referring particularly to FIGS. 3A-3B, the extension portion 430 and the curved portion 428 of the electrical connector 424 may be spoon-shaped. In such embodiments, the extension portion 430 may be configured to bias the curved portion 428 into contact with the flat top surface 422. For example, the extension portion 430 may be configured to bend relative to the base portion 426 at a hinge point 432. More particularly, the electrical connector 424 may be elastically deformed at the hinge point 432 when the curved portion 428 is in contact with the flat top surface 422 of the static pin 416. A degree of bending (e.g., an angle formed by the base portion 426 and the extension portion 430 after bending) may be adjusted so as to adjust a contact force between the electrical connector 424 and the static pin 416. As such, the electrical connector 424 allows for controlling the contact force between the electrical connector 424 and the static pin 416, which can improve reliability of the electrical connector 424 to contact the static pin 416 by reducing a likelihood of the curved portion 428 not contacting the flat top surface 422 (e.g., due to manufacturing tolerances and/or assembly variability).

Further, the extension portion 430 may include a length L determined from the hinge point 432 to the curved portion 428. The curved portion 428 may be configured to minimize the length L of the extension portion 430. For example, the curved portion 428 may include a profile designed (e.g., sized and/or shaped) to minimize the length L of the extension portion 430. Minimizing the length L of the extension portion 430 can reduce a likelihood of yielding at the hinge point 432. Further, minimizing the length L of the extension portion 430 reduces a footprint of the electrical connector 424, which is beneficial given packaging constraints of user computing device 100, including wearable computing devices. That is, minimizing the electrical connector 424 increases available packaging space for other components of the user computing device 100.

Referring now to FIGS. 4A-4B, the electrical connector 424 may be a washer. In such an embodiment, as shown, the base portion 426 may extend circumferentially around the hole 409 of the circuit board 406. More particularly, the base portion 426 may extend at least partially over the hole 409, as shown. Furthermore, the curved portion 428 may define a hole 454 extending therethrough. The hole 454 may be configured to minimize the contact area between the flat top surface 422 of the static pin 416 and the curved portion 428.

Further, the extension portion 430 may be configured to create interference contact between the curved portion 428 and the flat top surface 422. For example, the extension portion 430 may include a first portion 450 extending from the base portion 426 towards the flat top surface 422. Further, the extension portion 430 may include a second portion 452 extending from the first portion 450 to the curved portion 428. The second portion 452 may extend annularly from the first portion 450 to the curved portion 428. The second portion 452 may be spaced from the flat top surface 422. That is, the second portion 452 and the flat top surface 422 may define a gap 456 therebetween. More particularly, the extension portion 430 may be designed (e.g., sized and/or shaped) such that the gap 456 is less than a height of the curved portion 428 (e.g., a perpendicular distance from a midpoint of a chord of a circular segment defined by the curved portion 428). Accordingly, the curved portion 428 may extend across the gap 456 to contact the flat top surface 422. Configuring the gap 456 to be less than the height of the curved portion 428 creates the interference contact between the curved portion 428 and the flat top surface 422, as shown in FIG. 4B. The extension portion 430 and/or the base portion 426 may deflect in response to the contact force between the curved portion 428 and the flat top surface 422. As such, the electrical connector 424 allows for controlling the contact force (e.g., by adjusting a size of the gap 456) between the electrical connector 424 and the static pin 416, which can improve reliability of the electrical connector 424 to contact the static pin 416 by reducing a likelihood of the curved portion 428 not contacting the flat top surface 422.

In addition, as shown, the first portion 450 may be arranged at least partially within the hole 409 of the circuit board 406 (i.e., between the top and bottom surfaces of the circuit board 406). As such, the first portion 450 of the extension portion 430 may reduce the footprint of the electrical connector 424, which is beneficial given packaging constraints of user computing device 100, including wearable computing devices. That is, minimizing the electrical connector 424 increases available packaging space for other components of the user computing device 100.

### Additional Disclosure

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination. Databases and applications can be implemented on a single system or distributed across multiple systems. Distributed components can operate sequentially or in parallel.

While the present subject matter has been described in detail with respect to various specific example embodiments thereof, each example is provided by way of explanation, not limitation of the disclosure. Those skilled in the art, upon attaining an understanding of the foregoing, can readily produce alterations to, variations of, and equivalents to such embodiments. Accordingly, the subject disclosure does not preclude inclusion of such modifications, variations and/or additions to the present subject matter as would be readily apparent to one of ordinary skill in the art. For instance, features illustrated or described as part of one embodiment can be used with another embodiment to yield a still further embodiment. Thus, it is intended that the present disclosure cover such alterations, variations, and equivalents.

## Claims

1. A user computing device, comprising:
a housing defining a cavity;
a circuitry connection system contained at least partially within the cavity, the circuitry connection system comprising:
a circuit board comprising circuitry;
a static pin coupled to an electrical component and fixed relative to the circuit board, the static pin comprising a flat top surface; and
an electrical connector comprising a base portion coupled to the circuit board, a curved portion spaced from the base portion, and an extension portion extending from the base portion to the curved portion, the extension portion configured to bias the curved portion into contact with the flat top surface of the static pin to electrically connect the electrical component to the circuitry on the circuit board,
wherein the curved portion is configured to minimize direct current (DC) resistance between the static pin and the circuitry on the circuit board.

2. The user computing device of claim 1, wherein the circuit board defines a hole extending therethrough, the curved portion of the electrical connector contacting the flat top surface of the static pin at least partially within the hole.

3. The user computing device of claim 2, further comprising a spacer arranged between the electrical component and the circuit board, the spacer defining an opening aligned at least partially with the hole of the circuit board, wherein the static pin is arranged in the opening.

4. The user computing device of claim 3, wherein the spacer is formed of an insulating material.

5. The user computing device of claim 3 or 4, wherein the circuit board is arranged between the base portion of the electrical connector and the spacer.

6. The user computing device of any one of the preceding claims, wherein the extension portion is configured to bend relative to the base portion at a hinge point.

7. The user computing device of claim 6, wherein the curved portion is configured to minimize a length of the extension portion, the length of the extension portion determined from the hinge point to the curved portion.

8. The user computing device of any one of the preceding claims, wherein the electrical component is an electrical contact of a charging device.

9. A user computing device, comprising:
a housing defining a cavity;
a circuitry connection system contained at least partially within the cavity, the circuitry connection system comprising:
a circuit board comprising circuitry;
a static pin coupled to an electrical component and fixed relative to the circuit board, the static pin comprising a flat top surface; and
an electrical connector comprising a base portion coupled to the circuit board, a curved portion spaced from the base portion, and an extension portion extending from the base portion to the curved portion, the extension portion configured to create interference contact between the curved portion and the flat top surface of the static pin to electrically connect the electrical component to the circuitry on the circuit board,
wherein the curved portion is configured to minimize DC resistance between the static pin and the circuitry on the circuit board.

10. The user computing device of claim 9, wherein the extension portion comprises a first portion extending from the base portion towards the flat top surface and a second portion extending from the first portion to the curved portion, the second portion being spaced from the flat top surface.

11. The user computing device of claim 9 or 10, wherein the circuit board defines a hole extending therethrough, the curved portion of the electrical connector contacting the flat top surface of the static pin at least partially within the hole.

12. The user computing device of claim 11, further comprising a spacer formed of an insulating material and arranged between the electrical component and the circuit board, the spacer defining an opening aligned at least partially with the hole of the circuit board, wherein the static pin is arranged in the opening.

13. The user computing device of claim 12, wherein the circuit board is arranged between the base portion of the electrical connector and the spacer.

14. The user computing device of any one of claims 9 to 13, wherein the electrical component is an electrical contact of a charging device.

15. A circuitry connection system for a user computing device, the circuitry connection system comprising:
a circuit board comprising circuitry;
a static pin coupled to an electrical component and fixed relative to the circuit board, the static pin comprising a flat top surface; and
an electrical connector comprising a base portion coupled to the circuit board, a curved portion spaced from the base portion, and an extension portion extending from the base portion to the curved portion, the extension portion configured to bias the curved portion into contact with the flat top surface of the static pin to electrically connect the electrical component to the circuitry on the circuit board,
wherein the curved portion is configured to minimize DC resistance between the static pin and the circuitry on the circuit board.
